# EUROPÄISCHE PATENTSCHRIFT

(11) **EP 1 522 272 B1**
(45) Veröffentlichungstag und Bekanntmachung des Hinweises auf die Patenterteilung: **23.12.2009**
(21) Anmeldenummer: 04022859.5
(22) Anmeldetag: 24.09.2004
(51) Int. Cl.: A61C 17/08

(54) **Zweikomponenten-Absaugkanüle**
Two-components suction cannula
Canule d'aspiration à deux composants

(30) Priorität: 10.10.2003 DE 10347829
(43) Veröffentlichungstag der Anmeldung: 13.04.2005
(73) Patentinhaber: Coltène/Whaledent GmbH + Co. KG, 89129 Langenau (DE)
(72) Erfinder: Mannschedel, Werner, 89129 Langenau (DE); Müller, Barbara, Dr., 89129 Langenau (DE)
(74) Vertreter: Forstmeyer, Dietmar

(56) Entgegenhaltungen:
- EP-A- 0 447 718
- WO-A-2005/021066
- DE-U- 29 820 667
- GB-A- 1 017 515
- US-A- 5 085 633
- US-A- 5 924 866
- US-A1- 2003 014 842

## Beschreibung

Die vorliegende Erfindung betrifft nach ihrer Gattung eine Absaug-Kanüle zum Absaugen von fluiden Substanzen, insbesondere Speichel und Blut, bei der dentalmedizinischen Behandlung. Insbesondere betrifft sie eine Absaug-Kanüle, welche ein längliches, rohrförmiges Element mit einem inneren, fluidleitenden Durchgang umfasst, wobei der fluidleitende Durchgang an seinem einen Ende in eine Verbindungsöffnung zur Verbindung mit einer Saugvorrichtung und an seinem anderen Ende in eine Absaugöffnung zum Absaugen von Fluiden mündet. Die Absaugöffnung der Absaug-Kanüle soll bei Benutzung in die Mundhöhle eines Patienten eingebracht werden.

Derartige Absaug-Kanülen werden heutzutage routinemäßig und in großer Zahl bei der dentalmedizinischen Behandlung eingesetzt. In der Fertigung werden die Absaug-Kanülen im allgemeinen aus einem harten, nicht-elastischen Plastik durch Spritzgießen hergestellt.

In der praktischen Anwendung hat sich jedoch gezeigt, dass das harte, nicht-elastische Plastik der Absaug-Kanülen bei Kontakt mit den sensiblen anatomischen Strukturen der Mundhöhle sehr unangenehm für den Patienten ist und sogar Schmerzen auslösen kann. Zudem hat sich ergeben, dass derartige Absaug-Kanülen einer sehr starken Geräuschentwicklung beim Absaugvorgang unterliegen, wobei dieses Absauggeräusch aufgrund des harten Materials der Absaug-Kanüle bei Kontakt der Absaug-Kanüle mit einer anatomischen Struktur der Mundhöhle in äußerst unangenehmer Weise in das Gehörsystem und weitere anatomische Strukturen des Patienten übertragen wird.

Für den Anwender, d. h. den Zahnarzt und oft die zahntechnischen Assistenten, ist das manuelle Greifen und Festhalten der harten, an der Oberfläche glatten Absaug-Kanülen auf Dauer ermüdend und belastend. Dies gilt vor allem dann, wenn der Anwender zur Vermeidung einer Übertragung von übertragbaren Infektionskrankheiten, beispielsweise HIV oder Hepatitis, Schutzhandschuhe trägt, welche meist aus Latex gefertigt sind.

Da die aus hartem Plastik bestehenden Absaug-Kanülen im allgemeinen durch Spritzgießen hergestellt werden, weisen die Absaug-Kanülen wenigstens eine Anspritzstelle auf, welche in der industriellen Massenfertigung aufgrund des harten Materials jedoch nur unzureichend abgegratet werden können und deshalb praktisch immer einen scharfkantigen Rand aufweisen. Obgleich es heutzutage üblich ist, dass Zahnarzt und zahntechnische Assistenten zur Vermeidung von übertragbaren Infektionen Schutzhandschuhe bei der Behandlung von Patienten tragen, kommt es gelegentlich vor, dass Latex-Handschuhe durch den scharfen Grat einer Anspritzstelle aufgerissen werden. Dabei kann es zu einer unerwünschten Infektion von Patient oder Zahnarzt/zahntechnischen Assistenten kommen. Befindet sich eine solche scharfkantige Anspritzstelle im demjenigen Bereich der Absaug-Kanüle, welcher in die Mundhöhle eingeführt wird, also insbesondere nahe oder auf dem Absaugende der Absaug-Kanüle, so kann der Patient durch den scharfen Grat der Anspritzstelle bei einer Bewegung der Absaug-Kanüle sogar verletzt werden. Wird die Absaug-Kanüle etwa entlang der Mundschleimhaut geführt, so kann etwa die Mundschleimhaut durch den scharfen Grat der Anspritzstelle aufgerissen werden.

Falls eine durch Spritzgießen hergestellte Absaug-Kanüle eine flügelartige Verbreiterung ("Pelotte") ihres Absaugendes aufweist, ist diese produktionstechnisch stets mit einem mittig angeordneten, scharfkantigen Grat versehen, welcher entsprechend der scharfkantigen Anspritzstelle den Patienten verletzen und/oder den Schutzhandschuh des Anwenders beschädigen kann.

Ferner hat es sich in ökonomischer und ökologischer Hinsicht als nachteilig erwiesen, dass die Absaug-Kanülen lediglich als Einmalartikel produziert werden, d. h. die Absaug-Kanülen werden nach einmaligen Gebrauch weggeworfen, da diese durch den bestimmungsgemäßen Gebrauch mit möglicherweise infektiösen Fluiden, wie Speichel oder Blut, in Berührung gekommen sind. Für eine Zahnarztpraxis entstehen hierdurch durch die Vielzahl der behandelten Patienten nicht unbeträchtliche Anschaffungskosten. Ebenso ist die Entsorgung des möglicherweise infektiösen Materials kostspielig.

In EP 0 447 718 A wird beispielsweise ein Wegwerftupfer zum Absaugen (disposable suction swap) offenbart, der ein längliches, rohrförmiges Element umfasst, wobei ein Ende des rohrförmigen Elementes mit einer elastisch verformbaren Spitze verschlossen ist. Das andere Ende umfasst eine Verbindungsöffnung zur Verbindung mit einer Saugvorrichtung. Die wegwerfbare Kamüle weist einen Griffbereich auf, der fest mit dem rohrförmigen Element verbunden ist.

Aufgabe der vorliegenden Erfindung ist es, die eingangs genannten Nachteile der im Stand der Technik bekannten Absaug-Kanülen zu vermeiden.

Zur Lösung dieser Aufgabe schlägt die vorliegende Erfindung eine Absaug-Kanüle zum Absaugen von fluiden Substanzen, insbesondere Speichel und Blut, bei der dentalmedizinischen Behandlung vor, welche ein längliches, rohrförmiges Element mit einem inneren fluidleitenden Durchgang umfasst, welcher fluidleitende Durchgang an seinem einen Ende in eine Verbindungsöffnung zur Verbindung mit einer Saugvorrichtung und an seinem anderen Ende in eine Absaugöffnung zum Absaugen von Fluiden mündet. Ein charakteristisches Merkmal der Erfindung ist hierbei, dass das röhrförmige Element wenigstens teilweise von einem elastisch verformbaren Material umgeben ist und mit diesem einstückig ausgebildet ist.

Das rohrförmige Element weist einen zum manuellen Greifen der Absaug-Kanüle bestimmten Griffbereich auf welcher Griffbereich von dem elastisch verformbaren Material umgeben ist. Hierbei wird durch das weiche, elastisch verformbare Material ein sichereres Greifen und Festhalten der Absaug-Kanüle durch den Anwender ermöglicht. Auf Dauer tritt deshalb eine geringere Ermüdung des Anwenders als bei den herkömmlichen, harten Absaug-Kanülen ein. Dies bedeutet auch, dass der Anwender die Absaug-Kanüle ohne die Gefahr einer Beschädigung seines Schutzhandschuhes greifen kann, was die Handhabung der Absaug-Kanüle wesentlich erleichtert.

Für den Patienten besteht zudem keine Gefahr einer Verletzung von anatomischen Strukturen der Mundhöhle durch eine im Griffbereich befindliche Anspritzstelle mit scharfkantigem Grat.

In ökonomischer Hinsicht ist es erfindungsgemäß vorgeseher, dass wenn die Absaug-Kanüle sterilisierbar ist, insbesondere autoklavierbar ist. Dies ermöglicht, dass die Absaug-Kanüle für verschiedene Patienten verwendet werden kann, wodurch Anschaffungs- und Entsorgungskosten verringert werden.

Die erfindungsgemäße Absaug-Kanüle kann besonders vorteilhaft in monolithischer Form durch Spritzgießen, insbesondere 2-Komponenten-Spritzgießen, oder Extrusion hergestellt werden. Ebenso kann lediglich das rohrförmige Element der Absaug-Kanüle etwa durch Spritzgießen oder Extrudieren hergestellt werden, und anschließend das das rohrförmige Element wenigstens teilweise umgebende, elastisch verformbare Material durch ein Tauchverfahren auf das rohrförmige Element aufgebracht werden, wobei das rohrförmige Element in ein elastisch verformbares Material enthaltendes Tauchbad eingetaucht wird.

Mit anderen Worten, das längliche, rohrförmige Element der Absaug-Kanüle ist wenigstens teilweise mit einem weichen Material umgeben, wobei das rohrförmige Element aus einem nicht-elastischen, harten Material ausgebildet sein kann. Zudem ist die Absaug-Kanüle in vorteilhafter Weise einstückig ausgebildet, d. h. das das rohrförmige Element umgebende weiche, elastisch verformbare Material ist mit dem rohrförmigen Element unter Ausbildung einer monolithischen Struktur verbunden.

Falls die Absaug-Kanüle gänzlich durch Spritzgießen hergestellt wird, wenn also auch das das rohrförmige Element umgebende elastisch verformbare Material durch Spritzgießen hergestellt wird, ist die Anspritzstelle des weichen, elastisch verformbaren Materials sogar in der industriellen Massenfertigung ohne einen verbleibenden scharfkantigen Grat. Alternativ hierzu, kann, falls lediglich das rohrförmige Element durch Spritzgießen hergestellt wird, eine Anspritzstelle mit einem scharfkantigen Grat durch das das rohrförmige Element wenigstens teilweise umgebende weiche, elastisch verformbare Material abgedeckt werden.

In vorteilhafter Weise kann der Griffbereich auch mit einer Oberflächenstruktur, beispielsweise einer Riffelung, versehen werden.

Auch ist von besonderem Vorteil, wenn durch das elastisch verformbare Material im Griffbereich der Absaug-Kanüle eine haptische Erkennung des absaugöffnungsseitigen Endes der Absaug-Kanüle möglich ist. Hierdurch kann der Anwender durch "blindes" Greifen der Absaug-Kanüle feststellen, ob er die Absaug-Kanüle zur Anwendung für das Absaugen von Fluiden richtig in der Hand hat. Eine Sichtkontrolle, welche voraussetzt, dass der Anwender seinen Blick von dem Behandlungsort abwendet, erübrigt sich, was in vorteilhafter Weise die praktische Anwendung der Absaug-Kanüle erleichtert. Der Griffbereich kann zu diesem Zweck beispielsweise mit einer konischen Form ausgebildet sein, etwa dergestalt, dass eine konisch zulaufende Form die Absaugöffnung anzeigt.

Wenn das absaugöffnungsseitige Ende des rohrförmigen Elements eine flügelartige Verbreiterung (Pelotte) zum Beabstanden der Absaugöffnung von anatomischen Strukturen der Mundhöhle des Patienten formt, wie im Stand der Technik bekannt ist, hat es sich als besonders vorteilhaft erwiesen, wenn diese Pelotte von dem weichen, elastischen Material umgeben ist. Hierdurch wird ein weicher Kontaktbereich der Absaug-Kanüle für den Patientenkontakt geschaffen, welcher von einem Patienten als wesentlich angenehmer empfunden wird als bei den harten Absaug-Kanülen des Stands der Technik. Zudem bewirkt die Ummantelung der Pelotte mit dem weichen, elastisch verformbaren Material in vorteilhafter Weise eine gedämpfte Geräuscherzeugung beim Absaugen und es wird eine Übertragung des Absauggeräuschs in Gehöhr und weitere anatomische Strukturen des Patienten verringert. Für den Patienten bedeutet dies eine wesentliche Verbesserung des Komforts bei der dentalmedizinischen Behandlung.

Falls das die Pelotte umgebende, weiche, elastisch verformbare Material durch Spritzgießen hergestellt wird, kann die Anspritzstelle weich, es entsteht kein scharfkantiger Anspritzpunkt oder scharfkantiger, mittiger Grat. In alternativer Weise oder zusätzlich können Anspritzstellen mit scharfkantigen Rändern bzw. produktionsbedingte, mittig angeordnete, scharfkantige Grate durch das weiche, elastisch verformbare Material überdeckt werden. Eine mögliche Verletzung des Patienten in dem für den Patientenkontakt bestimmten Bereich der Absaug-Kanüle durch scharfkantige Ränder wird damit vermieden.

Ferner ist es erfindungsgemäß bevorzugt, wenn das elastisch verformbare Material mit einer Kodierung, insbesondere einer Farbkodierung versehen ist. Hierdurch können beispielsweise Hersteller-, Größen- und Beschaffenheitsangaben auf der Absaug-Kanüle vermerkt werden, so dass sich beispielsweise eine getrennte Aufbewahrung verschiedener Absaug-Kanülen erübrigt, da die Absaug-Kanülen leicht voneinander unterschieden werden können. Ferner werden Verwechslungen von verschiedenen Absaug-Kanülen verhindert.

Erfindungsgemäß ist es bevorzugt, wenn das rohrförmige Element ein durch Spritzguss formbares Material enthält. Hierbei kann es sich beispielsweise um einen Thermoplasten, insbesondere Polypropylen, Polystyrol, PE, PVC, PMNA oder ABS, oder Kombinationen davon handeln.

Ferner ist es erfindungsgemäß bevorzugt, dass das weiche, elastisch verformbare Material Gummi oder ein gummiartiges Material enthält wie z.B.: EPDM, SBR, NR, Butylkautschuk, Naturkautschuk, Latex, Polychloropren. Insbesondere ist es bevorzugt, wenn es sich hierbei um ein thermoplastisches Elastomer, insbesondere ein Blockcopolymer oder eine Elastomerlegierung bzw. Polymerblend handelt.

Elastomerlegierungen bzw. Polymerblends enthalten thermoplastische und elastomere Anteile, die durch Vermischen unterschiedlicher Komponenten zu neuen Materialien mit neuen Eigenschaften führen. Diese sind bislang in einer Vielzahl hergestellt worden. Am weitesten verbreitet und erfindungsgemäß besonders bevorzugt ist die Gruppe der EPDM/PP-Blends, NR/PP-Blends (thermoplastischer Naturkautschuk), NBR/PP-Blends, IIR/PP-Blends, EVA/PVDC-Blends und der NBR/PVC-Blends.

Ferner kann es sich erfindungsgemäß bei dem gummiartigen Material des das rohrförmigen Element umgebenden elastisch verformbaren Materials um Silikon oder eine Silikonverbindung handeln.

Die Erfindung wird nun anhand eines Ausführungsbeispiels näher erläutert, wobei Bezug auf die beigefügte Zeichnung genommen wird.

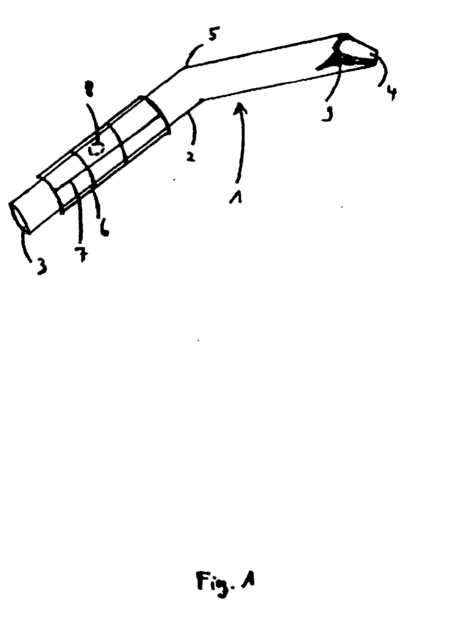

Fig. 1 zeigt eine Ausführungsform der erfindungsgemäßen Absaug-Kanüle.

Wie Fig. 1 zu entnehmen ist, umfasst eine erfindungsgemäß Absaug-Kanüle 1 ein rohrförmiges Element 2. Das rohrförmige Element 2, welches aus Polypropylen besteht, weist einen inneren fluidleitenden Durchgang auf, der an seinem einen Ende in eine Verbindungsöffnung 3 zur Verbindung mit einer Saugvorrichtung (nicht gezeigt) und an seinem anderen Ende in eine Absaugöffnung 4 zum Absaugen von Fluiden mündet. Die Absaug-Kanüle 1 weist eine Knick 5 zur leichteren Handhabung in der praktischen Anwendung auf. Ein Griffbereich der Absaug-Kanüle ist mit von einem weichen, elastisch verformbaren Material 6 umgeben. Bei dem weichen, elastisch verformbaren Material handelt es sich um thermoplastisches Elastomer (SEBS). Das elastisch verformbare Material weist zur besseren Handhabbarkeit der Absaug-Kanüle eine Riffelung 7 auf, welche aus Längs- und Querrinnen besteht. Durch das elastisch verformbare Material 6 wird eine Anspritzstelle 8 (in gestrichelter Weise schematisch dargestellt) des rohrförmigen Elements 2, welche einen scharfkantigen Rand aufweist, verdeckt. Die Absaug-Kanüle 1 ist mit einer flügelartigen Verbreiterung 9 (Pelotte) des absaugöffnungsseitigen Endes der Absaug-Kanüle versehen.

Die in Fig. 1 gezeigte, einstückig ausgebildete Absaug-Kanüle wurde durch ein 2-Komponenten-Spritzgießverfahren hergestellt.

## Patentansprüche

1. Absaug-Kanüle zum Absaugen von fluiden Substanzen, insbesondere Speichel und Blut, bei der dentalmedizinischen Behandlung, welche ein längliches, rohrförmiges Element mit einem inneren fluidleitenden Durchgang umfasst, welcher fluidleitende Durchgang an seinem einen Ende in eine Verbindungsöffnung zur Verbindung mit einer Saugvorrichtung und an seinem anderen Ende in eine Absaugöffnung zum Absaugen von Fluiden mündet,
wobei die Absaug-Kanüle sterilisierbar, insbesondere autoklavierbar ist und das röhrförmige Element wenigstens teilweise von einem elastisch verformbaren Material umgeben ist und mit diesem einstückig ausgebildet ist; und das rohrförmige Element einen zum manuellen Greifen der Absaug-Kanüle bestimmten Griffbereich aufweist, welcher Griffbereich von dem elastisch verformbaren Material umgeben ist; und (i) die Absaug-Kanüle durch Spritzguss oder Extrusion hergestellt ist; oder (ii) das rohrförmige Element durch Spritzgießen oder Extrudieren.hergestellt ist und das rohrförmige Element wenigstens teilweise umgebende elastische verformbare Material durch ein Tauchverfahren aufgebracht ist.

2. Absaug-Kanüle nach Anspruch 1,
**dadurch gekennzeichnet, dass** das rohrförmige Element aus einem nicht-elastischen Material ausgebildet ist.

3. Absaug-Kanüle nach Anspruch 1 oder 2,
**dadurch gekennzeichnet, dass** der von dem elastisch verformbaren Material umgebene Griffbereich eine haptische Erkennung des absaugöffnungsseitigen Endes der Absaug-Kanüle ermöglicht.

4. Absaug-Kanüle nach Anspruch 3,
**dadurch gekennzeichnet, dass** der von dem elastisch verformbaren Material umgebene Griffbereich eine konische Form aufweist.

5. Absaug-Kanüle nach einem der vorhergehenden Ansprüche 3 bis 4,
**dadurch gekennzeichnet, dass** der von dem elastisch verformbaren Material umgebene Griffbereich eine Oberflächenstruktur, insbesondere Riffelung, aufweist.

6. Absaug-Kanüle nach einem der vorhergehenden Ansprüche, bei welcher das absaugöffnungsseitige Ende von dem elastisch verformbaren Material umgeben ist.

7. Absaug-Kanüle nach einem der vorhergehenden Ansprüche, bei welcher das absaugöffnungsseitige Ende des rohrförmigen Elements eine Pelotte zum Beabstanden der Absaugöffnung von anatomischen Strukturen der Mundhöhle des Patienten formt, welche Pelotte von dem elastisch verformbaren Material umgeben ist.

8. Absaug-Kanüle nach einem der vorhergehenden Ansprüche, bei welcher das rohrförmige Element durch Spritzgießen hergestellt ist und wenigstens eine Anspritzstelle aufweist, wobei die wenigstens eine Anspritzstelle von dem elastisch verformbaren Material abgedeckt ist.

9. Absaug-Kanüle nach einem der vorhergehenden Ansprüche, bei welcher das elastisch verformbare Material mit einer Kodierung, insbesondere Farbkodierung versehen ist.

10. Absaug-Kanüle nach einem der vorhergehenden Ansprüche,
**dadurch gekennzeichnet,**
**dass** das rohrförmige Element aus einem durch Spritzguss formbaren Material besteht.

11. Absaug-Kanüle nach Anspruch 10,
**dadurch gekennzeichnet, dass** das rohrförmige Element Thermoplaste, insbesondere Polypropylene, Polystyrole, ABS, und Kombinationen davon enthält.

12. Absaug-Kanüle nach einem der vorhergegangenen Ansprüche,
**dadurch gekennzeichnet, dass** das elastisch verformbare Material Gummi oder ein gummiartiges Material ist.

13. Absaug-Kanüle nach Anspruch 12,
**dadurch gekennzeichnet, dass** das gummiartige Material ein thermoplastisches Elastomer, insbesondere ein Blockcopolymer oder eine Elastomerlegierung, ist.

14. Absaug-Kanüle nach Anspruch 12,
**dadurch gekennzeichnet, dass** das gummiartige Material Silikon oder eine Silikonverbindung ist.

## Claims

1. Aspiration cannula for the aspiration of fluid substances, especially saliva and blood, during dento-medical treatment, which comprises an elongate tubular element having an internal fluid-guiding passage, one end of which fluid-guiding passage opens into a connection orifice for connection to an aspiration device and the other end of which fluid-guiding passage opens into an aspiration orifice for aspirating fluids,
wherein the aspiration cannula is sterilisable, especially autoclavable, and the tubular element is surrounded at least in part by a resiliently deformable material and is of integral construction therewith; and the tubular element has a gripping region intended for manually gripping the aspiration cannula, which gripping region is surrounded by the resiliently deformable material; and (i) the aspiration cannula is produced by injection moulding or extrusion; or (ii) the tubular element is produced by injection moulding or extrusion and the resiliently deformable material surrounding at least in part the tubular element is applied by a dipping method.

2. Aspiration cannula according to claim 1,
**characterised in that** the tubular element is made from a non-resilient material.

3. Aspiration cannula according to claim 1 or 2,
**characterised in that** the gripping region surrounded by the resiliently deformable material makes possible haptic recognition of the aspiration-orifice end of the aspiration cannula.

4. Aspiration cannula according to claim 3,
**characterised in that** the gripping region surrounded by the resiliently deformable material has a conical shape.

5. Aspiration cannula according to one of the preceding claims 3 to 4, **characterised in that** the gripping region surrounded by the resiliently deformable material has a surface structure, especially grooving.

6. Aspiration cannula according to one of the preceding claims, wherein the aspiration-orifice end is surrounded by the resiliently deformable material.

7. Aspiration cannula according to one of the preceding claims, wherein the aspiration-orifice end of the tubular element is in the form of a pad for keeping the aspiration orifice spaced away from anatomical structures of the oral cavity of the patient, which pad is surrounded by the resiliently deformable material.

8. Aspiration cannula according to one of the preceding claims, wherein the tubular element is produced by injection moulding and has at least one gate mark, the at least one gate mark being covered over by the resiliently deformable material.

9. Aspiration cannula according to one of the preceding claims, wherein the resiliently deformable material is provided with a coding, especially colour coding.

10. Aspiration cannula according to one of the preceding claims, **characterised in that** the tubular element consists of a material which can be shaped by injection moulding.

11. Aspiration cannula according to claim 10,
**characterised in that** the tubular element comprises thermoplastic materials, especially polypropylenes, polystyrenes, ABS and combinations thereof.

12. Aspiration cannula according to one of the preceding claims, **characterised in that** the resiliently deformable material is rubber or a rubber-like material.

13. Aspiration cannula according to claim 12,
**characterised in that** the rubber-like material is a thermoplastic elastomer, especially a block copolymer or an elastomer alloy.

14. Aspiration cannula according to claim 12,
**characterised in that** the rubber-like-material is silicone or a silicone compound.

## Revendications

1. Canule d'aspiration pour aspiration de substances fluides, en particulier de la salive et du sang, dans le traitement dentaire, qui comprend un élément tubulaire oblong muni d'un passage intérieur de guidage du fluide, lequel passage de guidage du fluide débouche, à l'une de ses extrémités, dans un orifice de raccordement pour raccordement à un dispositif d'aspiration, et à son autre extrémité, dans un orifice d'aspiration destiné à l'aspiration de fluides, la canule d'aspiration étant stérilisable, en particulier autoclavable, et l'élément tubulaire étant entouré au moins partiellement d'un matériau déformable élastiquement et étant réalisé d'une manière monobloc avec celui-ci ; et l'élément tubulaire présentant une zone de préhension pour saisir manuellement la canule d'aspiration, laquelle zone de préhension est entourée du matériau déformable élastiquement ; et (i) la canule d'aspiration étant réalisée par moulage par injection ou extrusion ; ou (ii) l'élément tubulaire étant réalisé par moulage par injection ou extrusion et le matériau déformable élastiquement qui entoure au moins partiellement l'élément tubulaire étant appliqué par un procédé par immersion.

2. Canule d'aspiration selon la revendication 1, **caractérisée en ce que** l'élément tubulaire est réalisé dans un matériau non élastique.

3. Canule d'aspiration selon la revendication 1 ou 2, **caractérisée en ce que** la zone de préhension entourée du matériau déformable élastiquement permet une reconnaissance haptique de l'extrémité côté orifice d'aspiration de la canule d'aspiration.

4. Canule d'aspiration selon la revendication 3, **caractérisée en ce que** la zone de préhension entourée du matériau déformable élastiquement présente une forme conique.

5. Canule d'aspiration selon l'une des revendications 3 à 4, **caractérisée en ce que** la zone de préhension entourée du matériau déformable élastique présente une structure de surface, en particulier un striage.

6. Canule d'aspiration selon l'une des revendications précédentes, dans laquelle l'extrémité côté orifice d'aspiration est entourée du matériau déformable élastiquement.

7. Canule d'aspiration selon l'une des revendications précédentes, dans laquelle l'extrémité côté orifice d'aspiration de l'élément tubulaire forme une pelote pour écarter l'orifice d'aspiration de structures anatomiques de la cavité buccale du patient, laquelle pelote est entourée du matériau déformable élastiquement.

8. Canule d'aspiration selon l'une des revendications précédentes, dans laquelle l'élément tubulaire est réalisé par moulage par injection et présente au moins un point d'injection, le au moins un point d'injection étant recouvert par le matériau déformable élastiquement.

9. Canule d'aspiration selon l'une des revendications précédentes, dans laquelle le matériau déformable élastiquement est muni d'un codage, en particulier d'un codage couleur.

10. Canule d'aspiration selon l'une des revendications précédentes, **caractérisée en ce que** l'élément tubulaire est constitué d'un matériau pouvant être formé par moulage par injection.

11. Canule d'aspiration selon la revendication 10, **caractérisée en ce que** l'élément tubulaire contient des thermoplastiques, en particulier des polypropylènes, polystyrènes, ABS, et leurs combinaisons.

12. Canule d'aspiration selon l'une des revendications précédentes, **caractérisée en ce que** le matériau déformable élastiquement est du caoutchouc ou un matériau de type caoutchouc.

13. Canule d'aspiration selon la revendication 12, **caractérisée en ce que** le matériau de type caoutchouc est un élastomère thermoplastique, en particulier un copolymère à blocs ou un alliage élastomère.

14. Canule d'aspiration selon la revendication 12, **caractérisée en ce que** le matériau de type caoutchouc est du silicone ou un composé de silicone.
